# EUROPÄISCHE PATENTSCHRIFT

(11) **EP 1 654 144 B1**
(45) Veröffentlichungstag und Bekanntmachung des Hinweises auf die Patenterteilung: **17.11.2010**
(21) Anmeldenummer: 04762457.2
(22) Anmeldetag: 22.07.2004
(51) Int. Cl.: B60T 7/22, B60K 31/00

(54) **VORRICHTUNG ZUR LÄNGSFÜHRUNG EINES KRAFTFAHRZEUGS DURCH EINGRIFF IN DAS BREMSSYSTEM**
DEVICE FOR LONGITUDINALLY GUIDING A MOTOR VEHICLE BY INTERVENING IN THE BRAKE SYSTEM
DISPOSITIF DE GUIDAGE LONGITUDINAL POUR UN VEHICULE A MOTEUR PAR INTERVENTION SUR LE SYSTEME DE FREINAGE

(30) Priorität: 06.08.2003 DE 10335899
(43) Veröffentlichungstag der Anmeldung: 10.05.2006
(73) Patentinhaber: ROBERT BOSCH GMBH, 70442 Stuttgart (DE)
(72) Erfinder: BRAEUCHLE, Goetz, 74934 Reichartshausen (DE); WINNER, Hermann, 76467 Bietigheim (DE)
(86) Internationale Anmeldenummer: PCT/DE2004/001607
(87) Internationale Veröffentlichungsnummer: WO 2005/014350

(56) Entgegenhaltungen:
- EP-A- 1 061 495
- DE-A- 10 047 048

## Beschreibung

### Stand der Technik

Die Erfindung betrifft eine Vorrichtung zur Längsführung eines Kraftfahrzeugs, mit einem Fahrerassistenzsystem, das ein Bremsanforderungssignal an eine Brems-Steuereinrichtung ausgibt.

Ein Beispiel einer solchen Vorrichtung ist ein sogenanntes ACC-System (Adaptive Cruise Control), das es unter anderem gestattet, die Geschwindigkeit des Fahrzeugs an die Geschwindigkeit eines vorausfahrenden, mit Hilfe eines Radarsystems georteten Fahrzeugs anzupassen, so daß das vorausfahrende Fahrzeug in einem geeigneten Sicherheitsabstand verfolgt wird. Dazu greift das Fahrerassistenzsystem in das Antriebssystem und erforderlichenfalls auch in das Bremssystem des Fahrzeugs ein. Der Eingriff in das Bremssystem erfolgt bisher zumeist in der Weise, daß die Bremsverzögerung auf eine vom Fahrerassistenzsystem berechnete Soll-Bremsverzögerung geregelt wird. Wenn diese Regelung in der Brems-Steuereinrichtung erfolgt, bildet die Soll-Bremsverzögerung das Bremsanforderungssignal, das vom Fahrerassistenzsystem ausgegeben wird.

Die heute im Einsatz befindlichen ACC-Systeme sind generell für Fahrten mit höherer Geschwindigkeit, beispielsweise auf Autobahnen ausgelegt. Es gibt jedoch Bestrebungen, den Funktionsbereich solcher Systeme auf niedrigere Geschwindigkeiten zu erweitern und insbesondere auch eine sogenannte Stop and Go Funktion zu realisieren, bei der das Fahrzeug, beispielsweise bei einem Verkehrsstau, auch automatisch in den Stand gebremst werden kann, wenn das vorausfahrende Fahrzeug anhält. Dabei tritt das Problem auf, daß Ungenauigkeiten bei der Messung der Ist-Bremsverzögerung sich bei niedrigen Geschwindigkeiten gravierender auswirken, so daß die Regelung instabil wird. Besonders problematisch ist dabei der unstetige Übergang in den Stand (Anhalteruck). Bei Fahrzeugen mit Automatikgetriebe muß überdies die Bremse auch im Stand betätigt werden, um ein Anrollen des Fahrzeugs zu verhindern. Da im Stand jedoch die Ist-Bremsverzögerung gleich null ist, kann das Bremsanforderungssignal im Stand nicht über eine Soll-Bremsverzögerung definiert werden.

Diese Probleme können vermieden oder zumindest gemildert werden, wenn das vom Fahrerassistenzsystem ausgegebene Bremsanforderungssignal nicht in einer Soll-Bremsverzögerung, sondern direkt in einem Bremsdrucksignal besteht. Da jedoch die mit einem gegeben Bremsdruck erreichte Verzögerung des Fahrzeugs vom jeweiligen Fahrzeugtyp und vom Zustand der Bremse (Temperatur, Feuchtigkeit) abhängig ist, muß in diesem Fall das Fahrerassistenzsystem an den jeweiligen Fahrzeugtyp angepaßt werden und außerdem eine Vielzahl von Parametern verarbeiten können, die sich auf den Zustand des Bremssystems beziehen.

Aus der EP 1061495 A1 ist eine Fahrzeuggeschwindigkeits-Steuervorrichtung und ein Verfahren zum Nachfolgen eines vorausfahrenden Fahrzeugs, welches vor dem Fahrzeug fährt bekannt, wobei ein geeigneter Fahrzeugzwischenabstand aufrechterhalten wird indem eine relative Zielgeschwindigkeit auf Grundlage eines Fahrzeugzwischenabstands und einer relativen Geschwindigkeit berechnet wird. Die relative Zielgeschwindigkeit wird von der Fahrzeuggeschwindigkeit des vorausfahrenden Fahrzeugs subtrahiert, um eine Zielfahrzeuggeschwindigkeit abzuleiten. Auf Grundlage der Zielfahrzeuggeschwindigkeit wird eine Zielantriebskraft V berechnet um die Fahrzeuggeschwindigkeit mit Hilfe eines Fahrzeuggeschwindigkeits-Steuerabschnitts zu steuern.

Aus der DE 100 47 048 A1 ist eine Vorrichtung zur Längsführung eines Kraftfahrzeugs, mit einem Fahrerassistenzsystem bekannt, das ein Bremsanforderungssignal an eine Bremssteuereinrichtung ausgibt, wobei das Fahrerassistenzsystem dazu ausgebildet ist, ein Bremsanforderungssignal in der Form eines Wegsignals auszugeben, das den vom Fahrzeug zurückzulegenden Weg angibt, innerhalb dessen das Fahrzeug eine vorgegebene Zielgeschwindigkeit erreichen soll, wobei die Bremssteuereinrichtung eine Umrechnungseinheit zur Umrechnung des Wegsignals in ein Bremsbetätigungssignal aufweist.

### Vorteile der Erfindung

Die Erfindung mit den in Anspruch 1 angegebenen Merkmalen hat den Vorteil, daß das Fahrerassistenzsystem ohne spezielle Anpassungen in unterschiedlichen Fahrzeugtypen eingesetzt werden kann und daß dennoch eine präzise Steuerung oder Regelung des Bremsverhaltens insbesondere im unteren Geschwindigkeitsbereich ermöglicht wird. Dies wird erfindungsgemäß dadurch erreicht, daß das Fahrerassistenzsystem als Bremsanforderungssignal ein Wegsignal ausgibt, das angibt, innerhalb welchen Weges das Fahrzeug eine vorgegebene Zielgeschwindigkeit erreicht haben soll. Inhalt des Wegsignals ist also beispielsweise die Forderung: "Nach einer Wegstrecke von x Metern soll das Fahrzeug die Geschwindigkeit y km/h haben" oder im Fall eines Anhaltevorgangs: "Nach einer Wegstrecke von x Metern soll das Fahrzeug stehen". Die Umsetzung dieser Forderung bleibt dann der Brems-Steuereinrichtung überlassen.

Damit wird erreicht, daß alle Regelungs- oder Steuerungsvorgänge, die vom Fahrzeugtyp, vom Fahrzeugzustand und/oder vom Zustand der Fahrzeugbremse abhängig sind, in der Brems-Steuereinrichtung konzentriert sind, so daß das Fahrerassistenzsystem universell, ohne besondere Anpassungen, für verschiedene Fahrzeugtypen eingesetzt werden kann. Da die Brems-Steuereinrichtungen, insbesondere wenn sie mit einer Blockierschutzfunktion (ABS) ausgerüstet sind, ohnehin mit einer Sensorik zusammenarbeiten, die maßgebliche Größen wie etwa Raddrehzahlen und Radbeschleunigungen erfaßt, und da sich anhand dieser Sensorsignale auch die aktuellen Einsatzbedingungen der Bremse bestimmen lassen, insbesondere der Fahrbahn-Reibungskoeffizient und der Zusammenhang zwischen Bremsdruck und Bremsverzögerung, sind die für die Umsetzung des Bremsanforderungssignals benötigten Daten unmittelbar in der Brems-Steuereinrichtung verfügbar.

Anhand der bekannten Ist-Geschwindigkeit des Fahrzeugs ist die Brems-Steuereinrichtung in der Lage, die Bremsverzögerung zu berechnen, die nötig ist, damit die Zielgeschwindigkeit innerhalb der vom Wegsignal vorgegebenen Strecke erreicht wird, und der Bremsdruck kann dann so gesteuert oder geregelt werden, daß die Vorgaben des Bremsanforderungssignals erfüllt werden. Situationsabhängig kann dabei die Bremsverzögerung in der Brems-Steuereinrichtung entweder gesteuert oder geregelt werden. Bei sehr kleinen Geschwindigkeiten und insbesondere beim Bremsen in den Stand wird man vorzugsweise eine Steuerung der Bremsverzögerung anhand des für den speziellen Fahrzeugtyp und den aktuellen Betriebszustand bekannten Zusammenhangs zwischen Bremsdruck und Bremsverzögerung vorsehen. Auch der Bremsdruck, der erforderlich ist, um das Fahrzeug im Stand zu halten, wird durch die fahrzeugspezifische Brems-Steuereinrichtung bestimmt.

Vorteilhafte Weiterbildungen und Ausgestaltungen der Erfindung ergeben sich aus den Unteransprüchen.

In einer bevorzugten Ausführungsform sind für die Kommunikation zwischen dem Fahrerassistenzsystem und der Brems-Steuereinrichtung mindestens zwei Schnittstellen vorgesehen, von denen eine die Wegschnittstelle ist, über die das Bremsanforderungssignal in der Form eines Wegsignals ausgegeben wird, während über die andere Schnittstelle wahlweise ein anderes Bremsanforderungssignal, beispielsweise eine Soll-Bremsverzögerung oder ein Bremsdruck ausgebbar ist. So kann beispielsweise in einer Situation, in der die Vorgabe einer Zielgeschwindigkeit, die nach einer bestimmten Wegstrecke erreicht werden soll, nicht sinnvoll ist, im Fahrerassistenzsystem ein Wechsel von der Wegschnittstelle auf eine andere Schnittstelle, beispielsweise eine Verzögerungsschnittstelle erfolgen. Als Beispiel kann etwa die Situation betrachtet werden, daß das vorausfahrende Fahrzeug wieder anfährt, bevor das eigene Fahrzeug zum Stillstand gekommen ist. In diesem Fall wird über die Verzögerungsschnittstelle ein Bremsanforderungssignal in der Form einer Soll-Bremsverzögerung ausgegeben, das so beschaffen ist, daß gemäß einer bestimmten Zeitfunktion ein allmählicher Abbau der Bremsverzögerung und somit ein sanfter und komfortabler Übergang von Bremsen auf Beschleunigen erfolgt.

Dabei ist es zweckmäßig, wenn die Brems-Steuereinrichtung die jeweilige Ist-Verzögerung an das Fahrerassistenzsystem zurückmeldet. Die Zeitfunktion für die Soll-Bremsverzögerung läßt sich dann so anpassen, daß bei einem Wechsel der Schnittstelle ein ruckfreier Übergang erfolgt.

Eine Rückmeldung der Istwerte, nicht nur bei Benutzung der Verzögerungsschnittstelle, sondern auch bei Benutzung der Wegschnittstelle, ist auch zweckmäßig, um eine Überreaktion des Systems in den Fällen zu verhindern, in denen beispielsweise bei glatter Fahrbahn die eigentlich erforderliche Bremsverzögerung nicht erreicht werden kann. Nach dem sogenannten Basewert-Verfahren wird dann das vom Fahrerassistenzsystem ausgegebene Bremsanforderungssignal so modifiziert, das es um nicht mehr als einen bestimmten Toleranzwert Δ von dem zurückgemeldeten Istwert abweicht. Wenn z. B. auf glatter Fahrbahn der ursprünglich vom Fahrerassistenzsystem berechnete und als Bremsanforderungssignal ausgegebe Anhalteweg nicht eingehalten werden kann, wird der Soll-Anhalteweg verlängert, so daß er nur noch wenig über dem bei diesen Fahrbahnbedingungen erreichbaren Anhalteweg liegt. Wenn dann ein plötzlicher Wechsel von einem glatten Fahrbahnabschnitt auf eine griffigere Fahrbahn stattfindet, beträgt die Soll/Ist-Differenz höchstens Δ, und demgemäß wird auch die Bremsverzögerung zunächst nur moderat gesteigert. Erst wenn das Fahrerassistenzsystem durch den zurückgemeldeten Istwert darüber informiert wird, daß nun wieder ein kürzerer Anhalteweg möglich ist, wird der Anhalteweg wieder reduziert.

### Zeichnung

Ein Ausführungsbeispiel der Erfindung ist in den Zeichnungen dargestellt und in der nachfolgenden Beschreibung näher erläutert.

Es zeigen:
- Figur 1: ein Blockdiagramm einer erfindungsgemäßen Vorrich- tung;
- Figur 2: ein Beispiel für den zeitlichen Verlauf eines Bremsdrucksignals; und
- Figur 3: ein Weg-Zeit-Diagramm zur Illustration der Anpas- sung eines Bremsanforderungssignals an das tatsäch- liche Bremsvermögen.

### Beschreibung des Ausführungsbeispiels

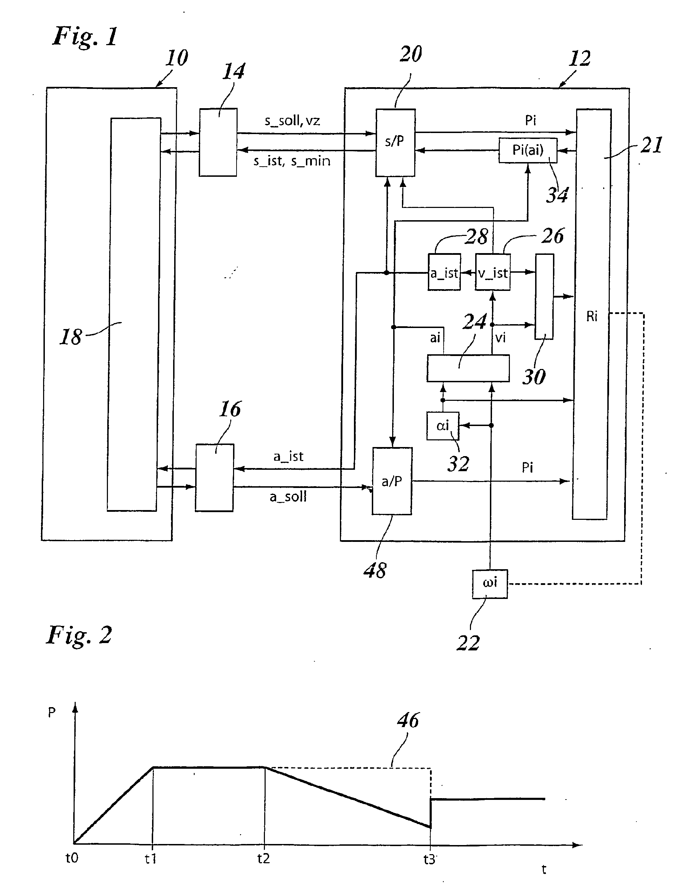

Figur 1 zeigt als Blockdiagramm ein Fahrerassistenzsystem 10, beispielsweise ein ACC-System, und eine Brems-Steuereinrichtung 12, die über eine Wegschnittstelle 14 und eine Verzögerungsschnittstelle 16 miteinander kommunizieren. Das Fahrerassistenzsystem 10 enthält einen Schnittstellenwähler 18, der je nach Situation entscheidet, über welche der beiden Schnittstellen die Kommunikation stattfindet.

Über jede der beiden Schnittstellen kann das Fahrerassistenzsystem 10 ein Bremsanforderungssignal an die Brems-Steuereinrichtung 12 ausgeben und so die Brems-Steuereinrichtung veranlassen, die Fahrzeugbremse zu betätigen. Im Fall der Wegschnittstelle 14 besteht das Bemsanforderungssigal in einem Wegsignal s_soll, das in der Brems-Steuereinrichtung 12 in einer Umrechnungseinheit 20 in Bremsdrucksignale Pi (i = 1 - 4) für jede der vier Radbremsen des Fahrzeugs umgerechnet wird. Die Bremsdrucksignale Pi werden an Bremsdruckregler 21 (Ri) weitergeleitet, die den vier Rädern des Fahrzeugs zugeordnet sind und den Bremsdruckaufbau an den Rädern bewirken.

Jedem Rad ist außerdem ein Raddrehzahlmesser 22 zugeordnet, der die Raddrehzahl wi des betreffenden Rades mißt und an die Brems-Steuereinrichtung meldet. Die Raddrehzahlwi wird in einem Wandler 24 anhand des bekannten Raddurchmesseres in eine Radgeschwindigkeit vi umgerechnet, die die Umfangsgeschwindigkeit des Rades und somit bei schlupffreiem Rollen auch die Istgeschwindigkeit des Fahrzeugs repräsentiert. Bei Bremsvorgängen kann der Schlupf allenfalls dazu führen, daß die Radgeschwindigkeit vi kleiner ist als die Fahrzeuggeschwindigkeit. In einem Auswahlblock 26 wird deshalb die Fahrzeuggeschwindigkeit v_ist durch Maximumauswahl aus den vier Radgeschwindigkeiten vi gebildet. Erforderlichenfalls kann dabei auch eine Korrektur für die unterschiedlichen Radgeschwindigkeiten bei Kurvenfahren vorgenommen werden. Die Fahrzeuggeschwindigkeit v_ist wird an die Umrechnungseinheit 20 gemeldet. Ein Differenzierglied 28 berechnet aus der Fahrzeuggeschwindigkeit v_ist die aktuelle Bremsverzögerung (negative Beschleunigung) a_ist, die ebenfalls an die Umrechnungseinheit 20 gemeldet wird.

Ein Schlupfdetektor 30 vergleicht die Radgeschwindigkeiten vi mit der Fahrzeuggeschwindigkeit v_ist und meldet den Schlupf jedes Rades an den zugehörigen Bremsdruckregler Ri. Ein Differenzierglied 32 berechnet aus den gemessenen Radgeschwindigkeiten wi die zugehörigen Winkelbeschleunigungen αi der Räder und meldet diese ebenfalls an die Bremsdruckregler Ri. Anhand der Schlupf- und Winkelbeschleunigungssignale sind die Bremsdruckregler Ri in der Lage, eine Antiblockierregelung durchzuführen und jedes einzelne Rad so zu bremsen, daß die Bremskraft gleichmäßig auf die linke und die rechte Fahrzeugseite verteilt wird und außerdem je nach Achslast angemessen zwischen Vorder- und Hinterrädern aufgeteilt wird.

Der Wandler 24 berechnet aus den Winkelbeschleunigungen αi der Räder die zugehörigen Rad-Bremsverzögerungen ai, also die Zeitableitungen der Umfangsgeschwindigkeiten der Räder. Diese Rad-Bremsverzögerungen ai werden für jedes Rad an einen Überwachungsblock 34 übermittelt, der eine Funktion Pi(ai) aufzeichnet, die den Zusammenhang zwischen Bremsdruck und Rad-Bremsverzögerung für das betreffende Rad sowie auch dem Maximalen Bremsdruck angibt, von dem ab das Rad blockiert. Diese Funktion wird der Umrechnungseinheit 20 zur Verfügung gestellt.

Über die Wegschnittstelle 14 wird zusammen mit dem Wegsignal s_soll auch eine Zielgeschwindigkeit vz übermittelt. Das Wegsignal s_soll spezifiziert den Weg des Fahrzeugs, innerhalb dessen die Zielgeschwindigkeit vz erreicht werden soll. Bei einem Anhaltevorgang ist vz gleich null, und s_soll ist der Anhalteweg. Im folgenden soll als Beispiel der Fall vz = 0 betrachtet werden. Für andere Werte von vz ist die Arbeitsweise der Vorrichtung analog.

Bei gegebener Fahrzeuggeschwindigkeit v_ist (Anfangsgeschwindigkeit) läßt sich der Anhalteweg durch zweifache Integration der Bremsverzögerung berechnen. Umgekehrt kann in der Umrechnungseinheit 20 anhand des durch s_soll gegebenen Anhalteweges berechnet werden, welche Bremsverzögerung erforderlich ist, um den Anhalteweg einzuhalten. Dabei kann zunächst idealisierend von einer konstanten Bremsverzögerung ausgegangen werden. Die so erhaltene Soll-Bremsverzögerung kann nun in der Umrechnungseinheit 20 auf unterschiedliche Weisen benutzt werden. Zum einen kann durch Vergleich der Soll-Bremsverzögerung mit der aktuellen Bremsverzögerung a_ist ein Bremsdrucksignal Pi erzeugt werden, das dazu dient, die Bremsverzögerung auf den Sollwert einzuregeln. Voraussetzung dafür ist, daß die Ist-Bremsverzögerung genau genug bestimmt werden kann. Dieser Regelalgorithmus wird deshalb vorzugsweise bei höheren Fahrzeuggeschwindigkeiten eingesetzt. Durch diese Regelung wird die durch das Bremsdrehmoment des Motors verursachte Fahrzeugverzögerung automatisch berücksichtigt.

Zum anderen kann anhand der berechneten Soll-Bremsverzögerung und anhand der vom Überwachungsblock 34 zur Verfügung gestellten Funktion Pi(ai) der Bremsdruck Pi aufgesucht werden, der für das betreffende Rad die gewünschte Soll-Bremsverzögerung ergibt. In diesem Fall wird der Bremsdruck nicht geregelt, sondern gesteuert. Die radspezifische Funktion Pi(ai) berücksicht dabei auch den Zustand der Bremse, beispielsweise die Beschaffenheit der Bremsbeläge, Temperatur- und Feuchtigkeitseinflüsse und dergleichen. Da diese Steuerung nicht von der gemessenen Bremsverzögerung abhängig ist, kann die Steuerung auch bei kleineren Geschwindigkeiten bis hin zum Fahrzeugstillstand ausgeführt werden. Bei Fahrzeugstillstand setzt die Umrechnungseinheit 20 den Bremsdruck Pi auf einen Wert, der ausreicht, das Fahrzeug im Stand zu halten.

In der Umrechnungseinheit 20 kann anstelle einer konstanten Bremsverzögerung auch eine Bremsverzögerung zugrunde gelegt werden, die nach einer bestimmten Zeitfunktion variiert, wobei stets die Bedingung eingehalten wird, daß der durch Integration der Bremsverzögerung erhaltene Anhalteweg mit s_soll übereinstimmt. Ein Beispiel einer solchen Zeitfunktion ist in Figur 2 gezeigt. Die Bremsverzögerung ist dort durch den zugehörigen Bremsdruck P repräsentiert. Zum Zeitpunkt t0 wird das Bremsanforderungssignal erstmals durch das Fahrerassistenzsystem 10 ausgegeben. Der Bremsdruck und die Bremsverzögerung werden dann bis zum Zeitpunkt t1 mit einer bestimmten Rampe allmählich erhöht, dann bis zum Zeitpunkt t2 konstant gehalten und dann mit einer bestimmten Rampe allmählich wieder verringert, bis das Fahrzeug zum Zeitpunkt t3 zum Stand kommt. Danach wird der Bremsdruck auf einen etwas höheren konstanten Wert gesetzt, so daß das Fahrzeug im Stand gehalten wird. Durch die rampenförmige Änderung des Bremsdruckes wird ein sanftes Einsetzen und Abklingen der Bremsvorgänge und somit ein hoher Fahrkomfort erreicht. Insbesondere die fallende Rampe zwischen den Zeitpunkten t2 und t3 sorgt für eine Milderung des Anhalteruckes, wenn das Fahrzeug zum Stand kommt. Die Lage der Zeitpunkte t1 und t2 auf der Zeitachse ist variabel und wird durch einen Komfort-Parameter bestimmt, der entweder in der Umrechnungseinheit 20 fest programmiert ist oder vom Fahrerassistenzsystem 10 übergeben wird.

Die Zeitfunktion der Soll-Bremsverzögerung, die durch die Kurve in Figur 2 repräsentiert wird, kann auch für die Regelung des Bremsdruckes in einem geschlossenen Regelkreis zugrunde gelegt werden. Der Übergang von Regeln auf Steuern erfolgt dann zu einem geeigneten Zeitpunkt, zu dem die Geschwindigkeit des Fahrzeugs so weit abgenommen hat, daß die Ist-Bremsverzögerung nicht mehr genau genug gemessen werden kann. Bei diesen niedrigen Geschwindigkeiten ist der Beitrag des Motordrehmoments zur Bremsverzögerung im allgemeinen vernachlässigbar. Bei Geschwindigkeiten unterhalb der Rollgeschwindigkeit, mit der das Fahrzeug bei gelöster Bremse rollen würde, wirkt das Motordrehmoment beschleunigend, also im Sinne einer Verringerung der Bremsverzögerung. Dieser Effekt ist im gezeigten Beispiel durch die Funktion Pi(ai) berücksichtigt, kann wahlweise jedoch auch rechnerisch kompensiert werden.

Aus der gemessenen Fahreuggeschwindigkeit v_ist und der gemessenen Ist-Bremsverzögerung a_ist kann die Umrechnungseinheit 20 durch Integration den voraussichtlichen Anhalteweg s_ist prognostizieren, nachdem das Fahrzeug tatsächlich zum Stillstand kommen wird. Dieser prognostizierte Anhalteweg wird über die Schnittstelle 14 an das Fahrerassistenzsystem 10 zurückgemeldet. Anstelle des prognostizierten Anhalteweges s_ist oder ergänzend dazu kann auch ein Mindestanhalteweg s_min ausgegeben werden, d. h., der Anhalteweg, der bei maximal erreichbarer Bremsverzögerung mindestens benötigt wird. Die Parameter zur Bestimmung der maximalen Bremsverzögerung (Fahrbahnreibungskoeffizienten etc.) sind in den Bremsdruckreglern 21 zumindest als Schätzgrößen verfügbar, und die maximale Bremsverzögerung läßt sich daher z. B. anhand der Funktionen Pi(ai) bestimmen.

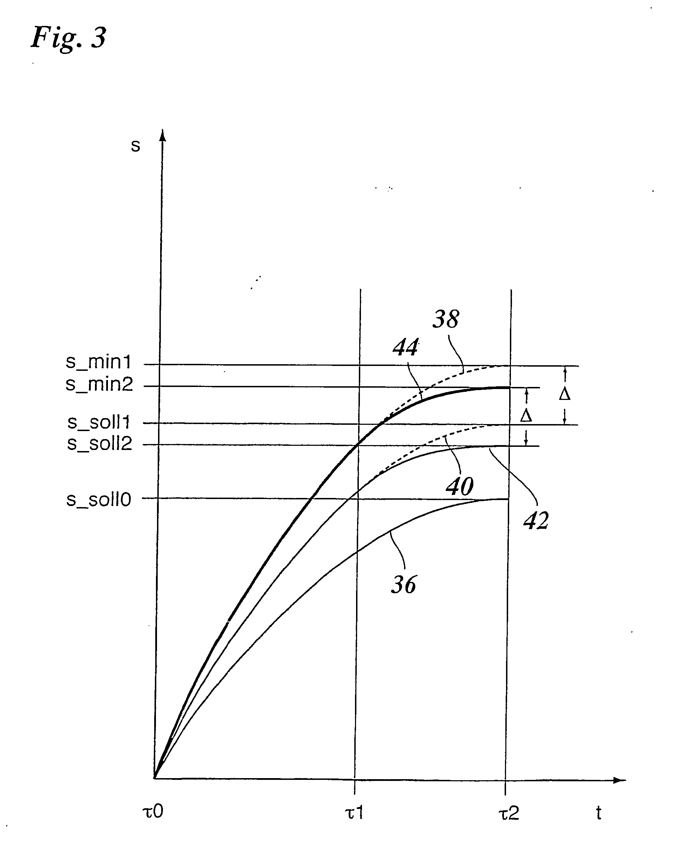

Im Fahrerassistenzsystem 10 wird das Wegsignal s_soll nach dem sogenannten Basewert-Verfahren so gebildet, das es um nicht mehr als einen bestimmten Toleranzwert Δ von dem prognostizierten Anhalteweg s_ist bzw. dem Mindestanhalteweg s_min abweicht. Dies ist in Figur 3 veranschaulicht. Zum Zeitpunkt τ0 wird das Wegsignal s_soll0 ausgegeben, und die Brems-Steuereinrichtung 12 leitet den Bremsvorgang ein. Das Weg-Zeit-Gesetz, das dem Wegsignal s_soll0 entspricht, ist in Figur 3 durch die Kurve 36 repräsentiert. Es soll nun angenommen werden, daß aufgrund ungünstigerer Bedingungen, beispielsweise wegen eisglatter Fahrbahn, die erforderliche Fahrzeugverzögerung nicht erreicht werden kann. Die Umrechnungseinheit 20 berechnet daher einen größeren Mindestanhalteweg s_min1, der durch die Kurve 38 repräsentiert wird. Daraufhin berechnet das Fahrerassistenzsystem 10 ein neues Wegsignal, s_soll1 das nur um den Betrag Δ kleiner ist als s_min1. Das zugehörige Weg-Zeit-Gesetz ist durch die Kurve 40 repräsentiert.

Zum Zeitpunkt τ1 soll nun das Fahrzeug einen Fahrbahnabschnitt erreichen, in dem die Fahrbahnoberfläche wieder griffiger ist, so daß eine höhere Bremsverzögerung erreichbar ist. Wäre das ursprüngliche Wegsignal s_soll0 beibehalten worden, so würde zu diesem Zeitpunkt eine Vollbremsung eingeleitet, und der Fahrkomfort wäre erheblich beeinträchtigt. Dieser Effekt wird hier dadurch vermieden, daß das Wegsignal in s_soll1 geändert wurde. Da die Fahrbahn jetzt griffiger ist, prognostiziert die Umrechnungseinheit 20 nach dem Zeitpunkt τ1 einen kleineren Mindestanhalteweg s_min2. Dementsprechend wird auch das Wegsignal nun reduziert auf den Weg s_soll2, der wieder um den Betrag Δ kleiner ist als s_min2. Das zugehörige Weg-Zeit-Gesetz ist durch die Kurve 42 repräsentiert. Das Fahrzeug wird nun etwas stärker abgebremst und folgt dem Weg-Zeit-Gesetz, das durch die fett eingezeichnete Kurve 44 repräsentiert wird, und kommt so nach dem prognostizierten Anhalteweg s_min2 zum Stillstand. Auf diese Weise führt der Umstand, daß die Griffigkeit der Fahrbahn wieder zugenommen hat, zwar zu einer Verkürzung des Anhalteweges von s_min1 auf s_min2, aber nicht zu einem unkomfortabel scharfen Abbremsen. Der Toleranzwert Δ kann vom Fahrerassistenzsystem 10 situationsabhängig variiert werden.

In Figur 3 ist der Einfachheit halber vernächlässigt worden, daß die tatsächliche Bremsverzögerung, die sich als Reaktion auf das Bremsanforderungssignal einstellt, erst mit einer gewissen zeitlichen Verzögerung gemessen werden kann. In der Praxis wird deshalb zwischen der Ausgabe des Wegsignals s_sol10 und der Rückmeldung des prognostizierten Mindestanhalteweges s_min1 eine gewisse Zeit vergehen. Der Weg, den das Fahrzeug in dieser Zeit zurückgelegt hat, kann jedoch rechnerisch berücksichtigt werden.

Natürlich sollte das Fahrerassistenzsystem hinreichend große Sicherheitsabstände vorsehen und das Bremsanforderungssignal so rechtzeitig ausgeben, daß eine gewisse Verlängerung des Anhalteweges, bedingt durch Straßenglätte oder dergleichen, noch akzeptiert werden kann und nicht zu einem Auffahrunfall führt. Wenn aber die Soll-Bremsverzögerung nach der in Figur 2 gezeigten Zeitfunktion berechnet wird, so besteht noch ein gewisser Spielraum, den man für eine Verkürzung des Anhalteweges nutzen kann. Wenn man nämlich auf die Milderung des Anhalteruckes und damit auf die rampenförmige Verringerung des Bremsdruckes zwischen t2 und t3 verzichtet, und statt dessen die maximal mögliche Bremsverzögerung bis zum Zeitpunkt t3 aufrechterhält, wie in Figur 2 durch die gestrichelt eingezeichnete Kurve 46 illustriert wird, so ergibt sich ein kürzerer Anhalteweg der als s_min zurückgemeldet werden kann. Erst wenn dieser Spielraum ausgeschöpft ist, wird der Soll-Anhalteweg in der in Figur 3 gezeigten Weise modifiziert.

Über die Verzögerungsschnittstelle 16 gibt das Fahrerassistenzsystem 10 eine Soll-Bremsverzögerung a_soll aus. Eine Regeleinheit 48 benutzt die vom Wandler 24 berechneten Rad-Bremsverzögerungen ai als Rückkopplungssignale und stellt über die Bremsdruckregler 21 die Bremsdrücke Pi so ein, daß die Bremsverzögerungen an den einzelnen Rädern auf die Soll-Bremsverzögerung a_soll geregelt werden. Dies ist natürlich nur möglich, solange die Räder nicht blockieren. Wenn bei glatter Fahrbahn das Antiblockiersystem aktiv wird, kann nur eine kleinere Bremsverzögerung a_ist erreicht werden. Diese Bremsverzögerung a_ist wird über die Verzögerungsschnittstelle 16 an das Fahrerassistenzsystem zurückgemeldet und führt analog zu der in Figur 3 illustrierten Prozedur (Basewert-Verfahren) zu einer Anpassung der Soll-Bremsverzögerung a_soll.

Wenn der Schnittstellenwähler 18 einen Wechsel von der Wegschnittstelle 14 auf die Verzögerungsschnittstelle 16 befiehlt, wird die zurückgemeldete Ist-Bremsverzögerung a_ist dazu benutzt, die anfängliche Soll-Bremsverzögerung a_soll an den aktuellen Istwert anzupassen, so daß ein ruckfreier Übergang erfolgt.

In einer modifizierten Ausführungsform kann die Verzögerungsschnittstelle 16 durch eine Bremsdruck-Schnittstelle ersetzt sein, über die vom Fahrerassistenzsystem 10 ein Soll-Bremsdruck an die Brems-Steuereinrichtung 12 ausgegeben wird. In der Brems-Steuereinrichtung 12 wird dieser Soll-Bremsdruck dann mit einem fahrzeugspezifischen Verstärkungsfaktor modifiziert, so daß man die von den Bremsdruckreglern 21 einzustellenden Bremsdrücke P1 an den einzelnen Rädern erhält. Die Ist-Bremsdrücke an den einzelnen Rädern werden dann mit Hilfe des Verstärkungsfaktors wieder in einen Ist-Bremsdruck für das Gesamtfahrzeug umgerechnet, der dann anstelle der Ist-Bremsverzögerung a_ist an das Fahrerassistenzsystem 10 zurückgemeldet wird.

Während im gezeigten Beispiel die Umrechnungseinheit 20 baulich und logisch in die Brems-Steuereinrichtung 12 integriert ist, kann sie wahlweise auch als selbständige Funktionseinheit ausgebildet oder in eine andere Systemkomponente, beispielsweise einen Antriebsstrang-Manager, integriert sein. Diese Systemkomponente wäre dann, obgleich sie baulich und/oder logisch selbständig ist, als Bestandteil der Brems-Steuereinrichtung 12 im Sinne der vorliegenden Anmeldung anzusehen und wäre an den jeweiligen Fahrzeugtyp anzupassen, während das Fahrerassistenzsystem 10 vom Fahrzeugtyp unabhängig ist.

Die Funktionen der Brems-Steuereinrichtung 12 einschließlich der Umrechnungseinheit 20 können nicht nur vom Fahrerassistenzsystem 10, sondern auch von anderen Fahrzeugsystemen benutzt werden, beispielsweise von einem Kollisionsvermeidungs- oder Crash-Mitigation-System, das unabhängig vom Fahrerassistenzsystem arbeitet und gegebenenfalls auch die vom Fahrer über das Fahrpedal und das Bremspedal gesteuerten Aktionen übersteuert, um einen Aufprall zu vermeiden oder die Unfallfolgen zu mildern.

## Patentansprüche

1. Vorrichtung zur Längsführung eines Kraftfahrzeugs, mit einem Fahrerassistenzsystem (10), das ein Bremsanforderungssignal an eine BremsSteuereinrichtung (12) ausgibt, wobei das Fahrerassistenzsystem (10) dazu ausgebildet ist, ein Bremsanforderungssignal in der Form eines Wegsignals (s_soll) auszugeben, das den vom Fahrzeug zurückzulegenden Weg angibt, innerhalb dessen das Fahrzeug eine vorgegebene Zielgeschwindigkeit (vz) erreichen soll, wobei die Brems-Steuereinrichtung (12) eine Umrechnungseinheit (20) zur Umrechnung des Wegsignals in ein Bremsbetätigungssignal (Pi) aufweist, **dadurch gekennzeichnet, daß** die Umrechnungseinheit (20) dazu ausgebildet ist, anhand der gemessenen tatsächlichen Bremsverzögerung (a ist) und der Fahrzeuggeschwindigkeit (v_ist) ein Wegsignal (sist, smin) zu berechnen und an das Fahrerassistenzsystem (10) zurückzumelden, das den prognostizierten Weg (s_ist) oder den bei maximal erreichbarer Bremsverzögerung mindestens benötigten Weg (smin) bis zum Erreichen der Zielgeschwindigkeit angibt.

2. Vorrichtung nach Anspruch 1, **dadurch gekennzeichnet, daß** die Zielgeschwindigkeit (vz) vom Fahrerassistenzsystem (10) vorgebbar ist

3. Vorrichtung nach Anspruch 1 oder 2, **dadurch gekennzeichnet, daß** die Zielgeschwindigkeit (vz) null ist

4. Vorrichtung nach einem der vorstehenden Ansprüche, **dadurch gekennzeichnet, daß** die Umrechnungseinheit (20) dazu ausgebildet ist, das Wegsignal (s_soll) in eine Soll-Bremsverzögerung umzurechnen.

5. Vorrichtung nach Anspruch 4, **dadurch gekennzeichnet, daß** die Umrechnungseinheit (20) dazu ausgebildet ist, das Bremsbetätigungssignal (Pi) in der Weise zu erzeugen, daß die Bremsverzögerung des Fahrzeugs auf die Soll-Bremsverzögerung geregelt wird.

6. Vorrichtung nach Anspruch 4 oder 5, **dadurch gekennzeichnet, daß** die Umrechnungseinheit (20) dazu ausgebildet ist, den auf die Radbremsen des Fahrzeugs wirkenden Bremsdruck in Abhängigkeit von der Soll-Bremsverzögerung zu steuern.

7. Vorrichtung nach Anspruch 1, **dadurch gekennzeichnet, daß** das Fahrerassistenzsystem (10) eine Begrenzungsfunktion aufweist, die die möglichen Werte für das auszugebende Wegsignal (s_soll) so begrenzt, daß dieses Wegsignal um weniger als ein vorgegebener Toleranzwert (A) von dem zurückgemeldeten Wegsignal (smin) abweicht.

8. Vorrichtung nach einem der vorstehenden Ansprüche, **dadurch gekennzeichnet, daß** das Fahrerassistenzsystem (10) mit der Brems-Steuereinrichtung (12) über eine Wegschnittsfielle (14), über die das Wegsignal (s_soll) ausgebbar ist, und über eine weitere Schnittstelle (16) kommuniziert, über die ein anderes Bremsanforderungssignal (a soll) ausgebbar ist, und daß das Fahrerassistenzsystem (10) einen Schnittstellenwähler (18) zur Wahl der für die Ausgabe des Bremsanforderungssignals zu benutzenden Schnittstelle aufweist.

9. Vorrichtung nach Anspruch 8, **dadurch gekennzeichnet, daß** die Brems-Steuereinrichtung (12) dazu ausgebildet ist, zu dem weiteren Bremsanforderungssignal (a_soll) ein entsprechendes lstsignal (a ist) zu erzeugen und über die weitere Schnittstelle (16) an das Fahrerassistenzsystem zurückzumelden.

## Claims

1. Device for longitudinally guiding a motor vehicle, having a driver assistance system (10) which outputs a brake request signal to a brake control device (12), wherein the driver assistance system (10) is designed to output a brake request signal in the form of a travel signal (s_setp) which indicates the travel which the vehicle is to carry out and within which the vehicle is to reach a predefined target speed (vz), wherein the brake control device (12) has a conversion unit (20) for converting the travel signal into a brake activation signal (Pi), **characterized in that** the conversion unit (20) is designed to calculate, on the basis of the measured actual braking deceleration (a act) and the vehicle speed (v_act), a travel signal (sact, smin) which indicates the predicted travel (s_act) or the travel (smin) which is required at least with the maximum achievable braking deceleration, until the target speed is reached and to report said travel signal back to the driver assistance system (10).

2. Device according to Claim 1, **characterized in that** the target speed (vz) can be predefined by the driver assistance system (10).

3. Device according to Claim 1 or 2, **characterized in that** the target speed (vz) is zero.

4. Device according to one of the preceding claims, **characterized in that** the conversion unit (20) is designed to convert the travel signal (s_setp) into a setpoint braking deceleration.

5. Device according to Claim 4, **characterized in that** the conversion unit (20) is designed to generate the brake activation signal (Pi) in such a way that the braking deceleration of the vehicle is adjusted to the setpoint braking deceleration.

6. Device according to Claim 4 or 5, **characterized in that** the conversion unit (20) is designed to control the brake pressure acting on the wheel brakes of the vehicle, as a function of the setpoint braking deceleration.

7. Device according to Claim 1, **characterized in that** the driver assistance system (10) has a limiting function which limits the possible values for the travel signal (s_setp) which is to be output, in such a way that this travel signal deviates from the fed-back travel signal (smin) by less than a predefined tolerance value (A).

8. Device according to one of the preceding claims, **characterized in that** the driver assistance system (10) communicates with the brake control device (12) via a travel interface (14) via which the travel signal (s_setp) can be output, and via a further interface (16) via which another brake request signal (a setp) can be output, and **in that** the driver assistance system (10) has an interface selector (18) for selecting the interface which is to be used for outputting the brake request signal.

9. Device according to Claim 8, **characterized in that** the brake control device (12) is designed to generate an actual signal (a act) corresponding to the further brake request signal (a_setp) and to feed it back to the driver assistance system via the further interface (16).

## Revendications

1. Dispositif de guidage longitudinal d'un véhicule automobile, comprenant un système d'assistance au conducteur (10) qui délivre un signal de demande de freinage à un dispositif de commande de frein (12), le système d'assistance au conducteur (10) étant configuré pour délivrer un signal de demande de freinage sous la forme d'un signal de course (s_soll) qui indique la course à parcourir par le véhicule pendant laquelle le véhicule doit atteindre une vitesse cible (vz) prédéfinie, le dispositif de commande de frein (12) présentant une unité de conversion (20) destiné à convertir le signal de course en un signal d'actionnement du frein (Pi), **caractérisé en ce que** l'unité de conversion (20) est configurée pour calculer, au moyen du ralentissement par freinage réel (a_ist) mesuré et de la vitesse du véhicule (v_ist), un signal de course (sist, smin) et le signaler en retour au système d'assistance au conducteur (10), lequel indique la course prévue (s_ist) ou, dans le cas du ralentissement par freinage maximal pouvant être atteint, la course minimale requise (smin) jusqu'à atteindre la vitesse cible.

2. Dispositif selon la revendication 1, **caractérisé en ce que** la vitesse cible (vz) peut être indiquée à l'avance par le système d'assistance au conducteur (10).

3. Dispositif selon la revendication 1 ou 2, **caractérisé en ce que** la vitesse cible (vz) est égale à zéro.

4. Dispositif selon l'une des revendications précédentes, **caractérisé en ce que** l'unité de conversion (20) est configurée pour convertir le signal de course (s_soll) en un ralentissement par freinage de consigne.

5. Dispositif selon la revendication 4, **caractérisé en ce que** l'unité de conversion (20) est configurée pour générer le signal d'actionnement du frein (Pi) de telle sorte que le ralentissement par freinage du véhicule est régulé en fonction du ralentissement par freinage de consigne.

6. Dispositif selon la revendication 4 ou 5, **caractérisé en ce que** l'unité de conversion (20) est configurée pour commander la pression de freinage qui agit sur les freins de roue du véhicule en fonction du ralentissement par freinage de consigne.

7. Dispositif selon la revendication 1, **caractérisé en ce que** le système d'assistance au conducteur (10) présente une fonction de limitation qui limite les valeurs possibles du signal de course (s_soll) à délivrer de telle sorte que l'écart entre ce signal de course et le signal de course signalé en retour (smin) est inférieur à une valeur de tolérance prédéfinie (A).

8. Dispositif selon l'une des revendications précédentes, **caractérisé en ce que** le système d'assistance au conducteur (10) communique avec le dispositif de commande de frein (12) par le biais d'une interface de course (14), au moyen de laquelle peut être délivré le signal de course (s_soll), et par le biais d'une interface supplémentaire (16) au moyen de laquelle peut être délivré un autre signal de demande de freinage (a_soll), et **en ce que** le système d'assistance au conducteur (10) présente un sélecteur d'interface (18) destiné à sélectionner l'interface à utiliser pour délivrer le signal de demande de freinage.

9. Dispositif selon la revendication 8, **caractérisé en ce que** le dispositif de commande de frein (12) est configuré pour générer un signal réel (a_ist) correspondant pour le signal de demande de freinage supplémentaire (a_soll) et pour le signaler en retour au système d'assistance au conducteur par le biais de l'interface supplémentaire (16).
